# EUROPÄISCHE PATENTSCHRIFT

(11) **EP 0 848 476 B1**
(45) Veröffentlichungstag und Bekanntmachung des Hinweises auf die Patenterteilung: **11.02.2004**
(21) Anmeldenummer: 97119773.6
(22) Anmeldetag: 12.11.1997
(51) Int. Cl.: H02K 5/24

(54) **Halterung für einen Motor, insbesondere einen Gebläserad-Elektromotor**
Holder for a motor, in particular an electrical fan-motor
Support pour um moteur, en particulier un moteur électrique de ventilateur

(30) Priorität: 12.12.1996 DE 19651735
(43) Veröffentlichungstag der Anmeldung: 17.06.1998
(73) Patentinhaber: Behr GmbH & Co., 70469 Stuttgart (DE)
(72) Erfinder: Gehrig, Joachim Dipl.-Ing., 70190 Stuttgart (DE); Schlinke, Gunnar, 70469 Stuttgart (DE); Eilemann, Andreas Dr., 70825 Korntal-Müchingen (DE); Hipp-Kalthoff, Christoph Dr., 75397 Simmozheim (DE); Zerelles, Paul Dipl.-Ing., 70180 Stuttgart (DE); Fuchs, Manfred, 70195 Stuttgart (DE); Otto, Jürgen Dipl.-Ing., 75428 Illingen (DE)

(56) Entgegenhaltungen:
- EP-A- 0 234 661
- EP-A- 0 642 206
- DE-A- 4 136 485
- DE-A- 19 504 970
- DE-C- 4 240 776
- DE-U- 9 108 745
- FR-A- 2 711 459

## Beschreibung

Die Erfindung bezieht sich auf eine Halterung für einen Motor, insbesondere für einen Gebläserad-Elektromotor einer Heizungs- oder Klimaanlage eines Kraftfahrzeuges, mit einem Adapter, der an einem äußeren Motorbauteil festlegbar ist und dieses wenigstens teilweise umfangsseitig umgibt, einem mit dem Adapter verbundenen Motorhalter und wenigstens einem schwingungsentkoppelnden Abstützelement.

Solche Halterungen werden beispielsweise zur Anbindung eines Elektromotors für ein Gebläserad einer Heizungs- oder Klimaanlage eines Kraftfahrzeuges an entsprechende Gehäuseteile der Heizungs- oder Klimaanlage bzw. Fahrzeugkarosserieteile verwendet. Eine bekannte Schwierigkeit ist dabei die Erzielung einer möglichst geringen Vibrationsübertragung, wozu das oder die schwingungsentkoppelnden Abstützelemente dienen, und die Minimierung von durch den Motorhalter verursachten Geräuschen.

Eine Halterung der eingangs genannten Art ist in der Offenlegungsschrift EP 0 642 206 A1 beschrieben. Der Adapter beinhaltet dort eine an einem Stirnende eines äußeren Motorbauteils, das vom Polring eines Elektromotors gebildet ist, festlegbare Bodenfläche und davon axial abragende Haltefinger, an deren radialer Außenseite gummielastische Abstützelemente angebracht sind. Über diese Abstützelemente ist der Adapter mit axial verlaufenden Befestigungsstegen verbunden, die von Radialstegen des Motorhalters abkragen, wobei diese Radialstege zwei konzentrische Ringe des Motorhalters miteinander verbinden. Die Abstützelemente sind an den Haltefingern des Adapters angebracht und weisen radial außen Rastnasen auf, mit denen sie in Rastöffnungen der Motorhalter-Befestigungsstege eingerastet sind.

Zur Schwingungsentkopplung und Geräuschminderung an einem Gehäuse oder einem Fahrzeug ist es aus der Offenlegungsschrift EP 0 545 003 A2 bekannt, zwischen dem Polring eines Elektromotors und einem Motorhalter leistenförmige, gummielastische Abstützelemente anzuordnen. Bei einem Ausführungsbeispiel sind die Abstützelemente formschlüssig mit dem Motorhalter verbunden. Um den Elektromotor in axialer Richtung zu sichern, ist der Polring mit einer oder mehreren Aussparungen versehen, in die knopfartige Vorsprünge der als Abstützmittel dienenden Abstützelemente eingreifen. Bei einem weiteren Ausführungsbeispiel ist der Motorhalter unter Zwischenfügung von gummielastischen Abstützelementen mit dem Lagerbügel des Elektromotors verbunden.

Aus dem Gebrauchsmuster DE 91 08 745 U1 ist es bekannt, einen Haltekörper aus gummielastischem Material mit einem umlaufenden Ringteil vorzusehen, der eine einen Stator eines Elektromotors umgebende Zwischenbuchse umspannt und an einem Motorhalter hält. Bei dieser Bauart sind zusätzlich drei gleichmäßig über den Umfang verteilte, an den Ringteil angeformte Armteile vorgesehen, die eine zusätzliche Abstützung zwischen dem Motorgehäuse und der Zwischenbuchse bewirken.

Die DE 42 40 776 C1 offenbart eine Befestigungsvorrichtung für einen Gebläsemotor.

Der Erfindung liegt als technisches Problem die Bereitstellung einer Halterung der eingangs genannten Art zugrunde, mit der eine weiter verbesserte Schwingungsentkopplung und eine Minderung des Geräuschbeitrags erzielt wird.

Die Erfindung löst dieses Problem durch die Bereitstellung einer Halterung mit den Merkmalen eines jeden der Ansprüche 1 und 4.

Bei der Halterung nach Anspruch 1 weist der Motorhalter mehrere, auf einer gemeinsamen Kreislinie liegende, axial verlaufende Befestigungsarme auf, die über Verbindungsstege mit einem ansonsten offenen Ring verbunden sind, wobei die Verbindungsstege in einer zur Halterungslängsachse parallelen Ebene liegen. Der Adapter ist einerseits an einem äußeren Bauteil des zu haltenden Motors und andererseits mit entsprechenden Haltefingern an den Motorhalter-Befestigungsarmen unter Zwischenfügung der schwingungsentkoppelnden Abstützelemente festgelegt. Die Abstützelemente sind gummielastisch ausgeführt und entweder an den Motorhalter-Befestigungsarmen oder. den Adapter-Haltefingern angebracht, wobei sie am jeweils anderen Teil in dort vorgesehene Aufnahmetaschen eingefügt sind. Eine dergestalt gebaute Halterung ist einfach montierbar und es zeigt sich, daß sie eine strömungstechnisch günstige Form aufweist, die den Luftströmungsweg für ein Gebläserad, das von dem gehaltenen Motor angetrieben wird, nur minimal beeinflußt.

Bei der Halterung nach Anspruch 4 sind die schwingungsentkoppelnden Abstützelemente zwischen axial beabstandeten Abschnitten des Adapters einerseits und des Motorhalters andererseits eingefügt. Schwingungen eines damit gehaltenen Motors werden auf diese Weise in axiale Belastungen der Abstützelemente umgesetzt und können dadurch von diesen sehr wirksam aufgefangen werden. Die gesamte Motorhalterung läßt sich sehr kompakt bauen und einfach montieren. Es zeigt sich, daß ein mit dieser Halterung gehaltener Motor mit hoher Laufruhe und geringer Geräuschemission betrieben werden kann. Insbesondere können die Abstützelemente mit vergleichsweise großem axialem Abstand zu einem vom gehaltenen Motor angetriebenen Gebläserad positioniert sein, was die Geräuschentwicklung aufgrund der vom Gebläserad angesaugten, an Teilen des Motorhalters und/oder des Adapters vorbeiströmenden Luft gering hält.

Weitere vorteilhafte Ausgestaltungen sind in den Unteransprüchen wiedergegeben.

Vorteilhafte Ausführungsformen der Erfindung sind in den Zeichnungen dargestellt und werden nachfolgend beschrieben. Hierbei zeigen:
- Fig. 1: eine Draufsicht auf eine Motorhalterung mit radial zwischen Motorhalter und Adapter eingebrachten Abstützelementen,
- Fig. 2: eine Schnittansicht längs der Linie II-II von Fig. 1,
- Fig. 3: eine Draufsicht auf eine Motorhalterung mit axial zwischen Motorhalter und Adapter eingebrachten Abstützelementen,
- Fig. 4: eine Schnittansicht längs der Linie IV-IV von Fig. 3,

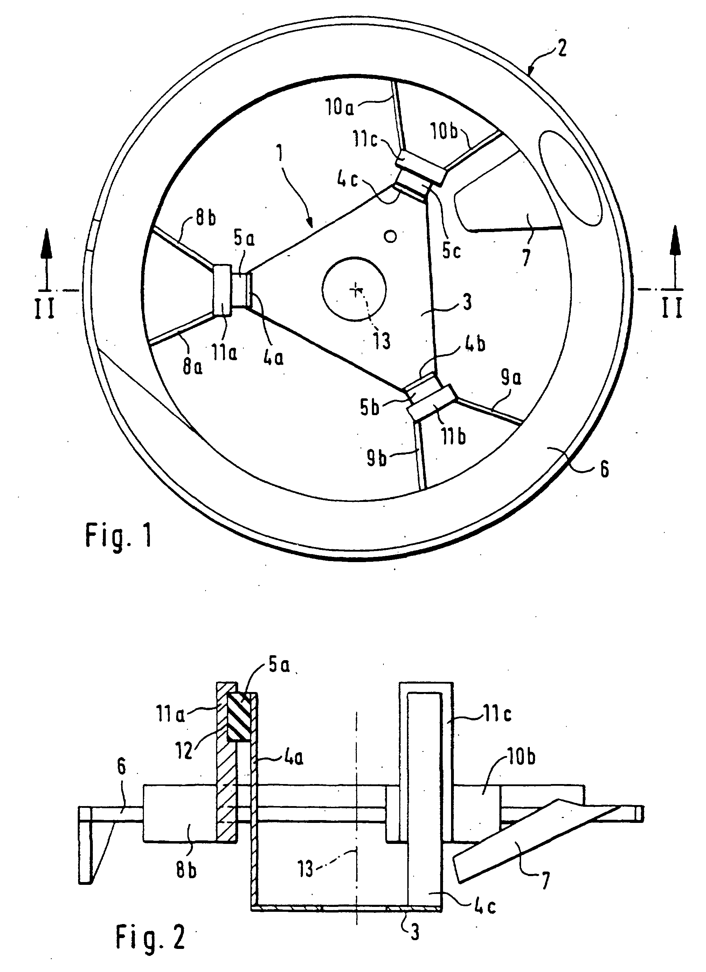

Die in den Figuren 1 bis 4 veranschaulichten, unterschiedlichen Halterungen eignen sich inbesondere zur schwingungsentkoppelten Halterung eines Gebläsemotors einer Heizungs- oder Klimaanlage in einem Kraftfahrzeug an entsprechenden, fahrzeugfest angeordneten Trägerteilen, an die jeweils ein Motorhalter, der einen Teil der Halterung bildet, starr angebracht wird. Sämtliche gezeigten Ausführungsbeispiele bewirken eine geringe Vibrationsübertragung vom Gebläsemotor zur Klimaanlage und eine Minderung des durch die Halterung bedingten Geräuschanteils, wobei dies durch unterschiedliche konstruktive Gestaltungen der Halterung erreicht wird, worauf nachfolgend zu den einzelnen Ausführungsbeispielen näher eingegangen wird.

Bei der in den Figuren 1 und 2 dargestellten Halterung ist eine hauptsächlich in radialer Richtung wirkende Schwingungsentkopplung zwischen einem Adapter 1 und einem Motorhalter 2 vorgesehen. Der Adapter 1 beinhaltet eine dreieckförmige Bodenfläche 3, die an einem Stirnende des aufzunehmenden, nicht gezeigten Motors beispielsweise durch Verschrauben festlegbar und hierzu mit passenden Öffnungen versehen ist.' Von der Bodenfläche 3 ragen senkrecht, d.h. axial, drei Haltefinger 4a, 4b, 4c ab, die auf gleichem Radius und in äquidistantem 120°-Winkelabstand in den drei Dreiecksspitzenbereichen der Bodenfläche 3 angeordnet sind. An den radialen Außenseiten der freien Endebereiche der Haltefinger 4a, 4b, 4c ist je ein quaderförmiges, gummielastisches Abstützelement 5a bis 5c aus Silikonmaterial angebrächt.

Der Motorhalter 2 beinhaltet einen Ring 6, der starr an einem Trägerteil, z.B. einem Klimaanlagen-Gehäuseteil, anbringbar ist. Zur Zuführung von Motorkühlluft weist der Motorhalter 2 eine vom Ring 6 schräg axial und radial nach innen weisende Kühlluftdüse 7 auf. Radial nach innen ragen von dem Ring 6 drei,Paare von Verbindungsstegen 8a, 8b; 9a, 9b; 10a, 10b ab, von denen jedes Paar am radial inneren Ende einen sich axial erstreckenden Befestigungsarm 11a, 11b, 11c hält. Die Befestigungsarme 11a, 11b, 11c liegen korrespondierend zu den Adapter-Haltefingern 4a, 4b, 4c auf gleichem Radius in äquidistantem 120°-Winkelabstand und weisen an ihrer radial nach innen weisenden Seite rechteckförmige Ausnehmungen 12 auf, in welche die an den Haltefingern 4a, 4b, 4c angebrachten Abstützelemente zur schwingungsentkoppelnden Montage des Adapters 1 am Motorhalter 2 formschlüssig eingefügt werden können. Bei dieser Montage werden die Haltefinger 4a, 4b, 4c leicht nach innen gedrückt und der Adapter 1 axial in den Motorhalter 2 vorgeschoben, bis die Abstützelemente 5a, 5b, 5c in ihre Aufnahmen 12 einschnappen.

Es zeigt sich, daß sich mit dieser Halterung ein Motor mit sehr hoher Laufruhe bei geringem Realisierungs- und Montageaufwand halten läßt. Auftretende Schwingungen des starr mit dem Adapter 1 zu verbindenden Motors werden von den Silikon-Abstützelementen 5a, 5b, 5c aufgefangen. Die gezeigte Halterung verursacht zudem nur vergleichsweise geringe Luftströmungsgeräusche im Fall der Aufnahme eines Gebläsemotors. Denn die von einem vom Motor angetriebenen Gebläserad, das sich axial vor den Haltefingern 4a, 4b, 4c und den Befestigungsarmen 11a, 11b, 11c befindet, angesaugte Luft kann von der Halterung weitgehend unbehindert zuströmen, da die Befestigungsarme 11a, 11b, 11c einen verhältnismäßig großen Abstand zum nicht gezeigten Gebläserad besitzen und die Verbindungsstege 8a bis 10b in parallel zur Adapterlängsache 13 verlaufenden Ebenen liegen, so daß sie für die axial angesaugte Luft keinen signifikanten Strömungswiderstand darstellen. Durch die formschlüssigen Aufnahmen 12 in den Befestigungsarmen 11a bis 11c brauchen an den Abstützelementen 5a bis 5c keine Rastnasen oder dergleichen angeformt sein, was zum einen fertigungstechnisch von Vorteil ist und zum anderen bei gegebenen Abmessungen des aufzunehmenden Motors eine vergleichsweise geringe Radialausdehnung für den Adapter 1 ermöglicht, die den strömungstechnisch günstigen, großen Abstand der Befestigungsarme 11a bis 11c vom Gebläserad ermöglicht.

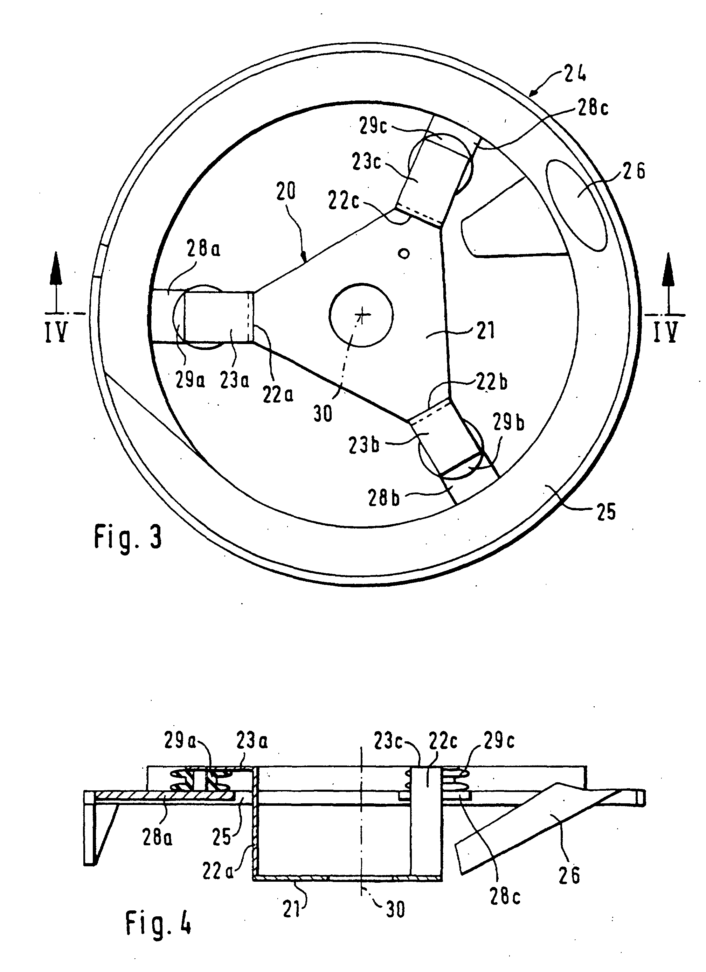

Die in den Figuren 3 und 4 gezeigte Halterung weist einen Adapter 20 auf, der wie im Beispiel von Fig. 1 aus einer dreieckförmigen Bodenfläche 21 zur Befestigung an einem Stirnende eines äußeren Motorbauteils, wie eines Polrings, und drei von deren Dreieckspitzenbereichen axial abragenden Haltefingern 22a, 22b, 22c besteht, die jedoch bei diesem Adapter an ihrem jeweiligen freien Ende zu einem radial nach außen weisenden Endbereich 23a, 23b, 23c abgewinkelt sind. Der Adapter 20 ist mit einem Motorhalter 24 verbunden, der einen Ring 25 beinhaltet, von dem eine Kühlluftdüse 26 radial nach innen ragt. Vom Motorhalterring 25 ragen drei Befestigungsarme 28a, 28b, 28c in äquidistantem 120°-Winkelabstand so weit radial nach innen, daß sie radial mit den abgewinkelten Haltefingerendbereichen 23a, 23b, 23c überlappen. In diesen Überlappungsbereich sind axial verbindende Abstützelemente 29a, 29b, 29c eingebracht, die somit die Verbindung zwischen Adapter 20 und Motorhalter 24 darstellen. Während die Abstützelemente beim Beispiel der Figuren 1 und 2 hauptsächlich in radialer Richtung der Halterung beansprucht werden, werden die Abstützelemente 29a, 29b, 29c in diesem Fall primär in Axialrichtung, d.h. in Richtung Adapterlängsachse 30 belastet. Es treten daher vorwiegend Druck- und keine Scherbelastungen der Abstützelemente 29a, 29b, 29c auf. Eine günstige Wahl der Materialien besteht darin, Adapter 20 und Motorhalter 24 aus einem harten Kunststoff, insbesondere einem Thermoplast, wie z.B. Polypropylen oder Polyamid, und die Abstützelemente 29a, 29b, 29c aus einem weichen, gummielastischen Kunststoff, insbesondere einem thermoplastischen Elastomer, wie z.B. SBS, SEBS oder PP/EPDM, herzustellen. Diese Materialwahl erlaubt die Herstellung der Halterung in einem gemeinsamen Fertigungsprozeß für Adapter 20, Motorhalter 24 und Abstützelemente 29a, 29b, 29c.

Die Bauweise mit primär axial beanspruchten, zwischen die Haltefingerendbereiche 23a, 23b, 23c des Adapters 20 und die davon axial beabstandeten Befestigungsarme 28a, 28b, 28c des Motorhalters 24 eingefügten Abstützelementen 29a, 29b, 29c erlaubt eine ausreichende Schwingungsentkopplung auch bei außerhalb der Motorschwerpunktsebene liegenden Abstützelementen 29a, 29b, 29c. Durch die gegenüber dem Beispiel der Figuren 1 und 2 deutlich geringere Axialhöhe der Haltefinger 22a, 22b, 22c liegen die Abstützelemente 29a, 29b, 29c bei der Halterung der Figuren 3 und 4 versetzt zur Schwerpunktsquerebene eines damit zu haltenden Gebläsemotors auf der gebläseradabgewandeten Seite. Dadurch ergibt sich ein verhältnismäßig großer Abstand der Halterung vom Gebläserad, so daß das Strömungsverhalten der vom Gebläserad angesaugten Luft durch die Halterung nur wenig beeinflußt wird. Neben einer guten Schwingungsentkopplung und der Möglichkeit einer Zweikomponentenfertigung in einem einzigen Herstellungswerkzeug besitzt diese Halterung somit den weiteren Vorteil eines geringeren Beitrags zur Strömungsgeräuschentwicklung.

## Patentansprüche

1. Halterung für einen Motor, insbesondere für einen Gebläserad-Elektromotor einer Heizungs- oder Klimaanlage eines Kraftfahrzeuges, mit
- einem Adapter (1), der an einem äußeren Motorbauteil festlegbar ist und dieses wenigstens teilweise umfangsseitig umgibt,
- einem mit dem Adapter (1) verbundenen Motorhalter (2) und
- wenigstens einem schwingungsentkoppelnden Abstützelement (5a,5b,5c),
- wobei der Adapter (1) eine an einem Stirnende des äußeren Motorbauteils festlegbare Bodenfläche (3) und davon axial abragende Haltefinger (4a, 4b, 4c) aufweist, die jeweils mit ihrem freien Endbereich über je eines der Abstützelemente (5a, 5b, 5c) mit zugeordneten, axial verlaufenden Befestigungsarmen (11a, 11b, 11c) des Motorhalters (2) verbunden sind, die auf gleichem Radius und innerhalb eines Rings (6) des Motorhalters liegen, an dem sie über jeweils wenigstens einem, in einer zur Halterungslängsachse (13) parallelen Ebene liegenden Verbindungssteg (8a bis 10b) angebracht sind, wobei
- die Abstützelemente (5a, 5b, 5c) entweder an den Motorhalter-Befestigungsarmen oder an den Adapter-Haltefingern angebracht und in zugeordnete Aufnahmetaschen (12) eingefügt sind, die in der radialen Außenseite der Haltefinger bzw. in der radialen Innenseite der Befestigungsarme eingebracht sind.

2. Halterung nach Anspruch 1, **dadurch gekennzeichnet, daß** jedes Abstützelement (5a,5b,5c) in radialer Richtung zwischen dem zugeordneten Befestigungsarm (11a,11b,11c) und dem Endbereich des zugehörigen Halterfingers (4a,4b,4c) angeordnet ist.

3. Halterung nach Anspruch 2, **dadurch gekennzeichnet, daß** jedes Abstützelement (5a,5b,5c) quaderförmig ist.

4. Halterung für einen Motor, insbesondere für einen Gebläserad-Elektromotor einer Heizungs- oder Klimaanlage eines Kraftfahrzeuges, mit
- einem Adapter (20) der an einem äußeren Motorbauteil festlegbar ist und dieses wenigstens teilweise umfangsseitig umgibt,
- einem mit dem Adapter (20) verbundenen Motorhalter (24) und
- wenigstens einem schwingungsentkoppelnden Abstützelement (29a,29b,29c),
- wobei der Adapter (20) eine an einem Stirnende des äußeren Motorbauteils festlegbare Bodenfläche (21) und davon axial abragende Haltefinger (22a, 22b, 22c) aufweist, deren freier Endbereich (23a, 23b, 23c) radial nach außen abgewinkelt ist, und
- Adapter (20) und Motorhalter (24) über die schwingungsentkoppelnden Abstützelemente (29a, 29b, 29c) dadurch verbunden sind, daß je ein Abstützelement zwischen einem radial nach außen abgewinkelten Haltefingerendbereich des Adapters und einem davon axial beabstandeten, radial verlaufenden Befestigungsarm (28a, 28b, 28c) des Motorhalters eingebracht ist.

5. Halterung nach Anspruch 4, **dadurch gekennzeichnet daß** jedes Abstützelement (29a,29b,29c) in axialer Richtung zwischen dem zugeordneten Befestigungsarm (28a,28b,28c) und dem Endbereich (23a,23b,23c) des zugehörigen Haltefingers (22a,22b,22c) angeordnet ist.

6. Halterung nach Anspruch 5, **dadurch gekennzeichnet, daß** jedes Abstütz-Element (29a,29b,29c) einen kreisförmigen Querschnitt aufweist.

7. Halterung nach einem der Vorhergehenden Ansprüche, **dadurch gekennzeichnet, daß** die Bodenfläche (3,21) des Adapters (1;20) dreieckförmig ist.

8. Halterung nach einem der vorhergehenden Ausprüche, **dadurch gekennzeichnet, daß** von der Bodenfläche (3;21) drei Haltefinger (4a,4b,4c; 22a,22b,22c) axial abragen.

9. Halterung nach Anspruch 8, **dadurch gekennzeichnet, daß** die Haltefinger (4a,4b,4c; 22a,22b,22c) auf gleichem Radius angeordnet sind.

10. Halterung nach Anspruch 8 oder 9, **dadurch gekennzeichnet, daß** die drei Haltefinger (4a,4b,4c; 22a,22b,22c) in äquidistantem 120°-Winkelabstand in den drei Dreiecksspitzenbereichen der Bodenfläche (3;21) angeordnet sind.

11. Halterung nach einem der vorgehenden Ansprüche, **dadurch gekennzeichnet, daß** der Adapter und Motorhalter aus einem harten Kunststoff, insbesondere aus einem Thermoplast, wie z. B: Polypropylen oder Polyamid hergestellt ist.

12. Halterung nach einem der vorhergehenden Ansprüche, **dadurch gekennzeichnet, daß** jedes Abstützelement zwischen Haltefinger und Befestigungsarm ein gummielastisches Element ist.

13. Halterung nach einem der vorgehenden Ansprüche, **dadurch gekennzeichnet, daß** jedes das Abstützelement aus einem weichen, gummielastischen. Kunststoff, wie insbesondere einem thermoplastischen Elastomer, hergestellt ist.

## Claims

1. Holder for a motor, in particular for an electric fan motor of a heating or air-conditioning system of a motor vehicle, comprising
- an adapter (1), which can be fixed to an external motor component and at least partially encloses the peripheral side thereof,
- a motor holder (2) joined to the adapter (1) and
- at least one vibration-uncoupling support element (5a, 5b, 5c),
- the adapter (1) having a base surface (3) which can be secured to a side-end of the external motor component and retaining fingers (4a, 4b, 4c) projecting out axially therefrom, respectively joined at their free end region by means of one of the support elements (5a, 5b, 5c) to co-operating axially extending fixing arms (11a, 11b, 11c) of the motor holder (2), which lie on a same radius and within a ring (6) of the motor holder, on which they are mounted by means of at least one connecting web (8a to 10b) in a plane parallel with the holder longitudinal axis (13),
- the support elements (5a, 5b, 5c) being mounted either on the motor holder-fixing arms or on the adapter-retaining fingers and inserted in co-operating seating pockets (12) provided in the radially outer face of the retaining fingers or in the radially inner face of the fixing arms.

2. Holder as claimed in claim 1, **characterised in that** every support element (5a, 5b, 5c) is disposed in a radial direction between the associated fixing arm (11a, 11b, 11c) and the end region of the co-operating retaining finger (4a, 4b, 4c).

3. Holder as claimed in claim 2, **characterised in that** every support element is a square-shaped element (5a, 5b, 5c).

4. Holder for a motor, in particular for an electric fan motor of a heating or air-conditioning system of a motor vehicle, comprising
- an adapter (20), which can be fixed to an external motor component and at least partially encloses the peripheral side thereof,
- a motor holder (24) joined to the adapter (20) and
- at least one vibration-uncoupling support element (29a, 29b, 29c),
- the adapter (20) having a base surface (21) which can be secured to a side-end of the external motor component and retaining fingers (22a, 22b, 22c) projecting out axially therefrom, the free end region (23a, 23b, 23c) of which is bent radially outwards and
- the adapter (20) and motor holder (24) are joined by means of the vibration-uncoupling support elements (29a, 29b, 29c) and a respective support element is inserted between a retaining finger-end region of the adapter bent radially outwards and a radially extending fixing arm (28a, 28b, 28c) of the motor holder spaced at an axial distance therefrom.

5. Holder as claimed in claim 4, **characterised in that** every support element (29a, 29b, 29c) is disposed in the axial direction between the co-operating fixing arm (28a, 28b, 28c) and the end region (23a, 23b, 23c) of the associated retaining finger (22a, 22b, 22c).

6. Holder as claimed in claim 5, **characterised in that** every support element (29a, 29b, 29c) has a circular cross section.

7. Holder as claimed in one of the preceding claims, **characterised in that** the base surface (3; 21) of the adapter (1; 20) is triangular in shape.

8. Holder as claimed in one of the preceding claims, **characterised in that** three retaining fingers (4a, 4b, 4c; 22a, 22b, 22c) project out from the base surface (3; 21).

9. Holder as claimed in claim 8, **characterised in that** the retaining fingers (4a, 4b,, 4c; 22a, 22b, 22c) are disposed on a same radius.

10. Holder as claimed in claim 8 or 9, **characterised in that** the three retaining fingers (4a, 4b, 4c; 22a, 22b, 22c) are spaced equidistantly at an angle of 120E in the regions of the three triangle corners.

11. Holder as claimed in one of the preceding claims, **characterised in that** the adapter and motor holder are made from a hard plastic material, in particular a thermoplastic, such as polypropylene or polyamide, for example.

12. Holder as claimed in one of the preceding claims, **characterised in that** every support element is a rubber-like elastic element between retaining finger and fixing arm.

13. Holder as claimed in one of the preceding claims, **characterised in that** every support element is made from a soft, rubber-like elastic plastic material, such as a thermoplastic elastomer in particular.

## Revendications

1. Support pour un moteur, en particulier pour un moteur électrique pour roue de ventilateur d'une installation de chauffage ou de climatisation d'un véhicule automobile, équipé
- d'un adaptateur (1), qui peut être fixé sur un composant de moteur extérieur, et entoure celui-ci au moins partiellement côté périphérie,
- d'une fixation de moteur (2) reliée à l'adaptateur (1) et
- d'au moins un élément de soutien (5a, 5b, 5c) dissociant le véhicule des vibrations,
- moyennant quoi l'adaptateur (1) présente une surface de fond (3) pouvant être fixée sur une extrémité avant du composant de moteur extérieur et des doigts de retenue (4a, 4b, 4c) dépassant axialement de cette surface, qui sont reliés chacun par leur zone d'extrémité libre au moyen d'un des éléments de soutien (5a, 5b, 5c) à des bras de fixation (11a, 11b, 11c), attribués et agencés axialement, de la fixation de moteur (2), qui sont disposés sur le même rayon et à l'intérieur d'une bague (6) de la fixation de moteur, sur laquelle ils sont disposés au moyen respectivement d'au moins une nervure de liaison (8a à 10b) située dans un plan parallèle à l'axe longitudinal du support (13),
- les éléments de soutien (5a, 5b, 5c) étant disposés sur les bras de fixation de la fixation de moteur ou sur les doigts de retenue de l'adaptateur et insérés dans des poches de logement attribuées (12), qui sont introduites dans le côté extérieur.radial des doigts de retenue ou dans le côté intérieur radial des bras de fixation.

2. Support selon la revendication 1, **caractérisé en ce que** chaque élément de soutien (5a, 5b, 5c) est disposé dans le sens radial entre le bras de fixation (11a, 11b, 11c) attribué et la zone d'extrémité du doigt de retenue (4a, 4b, 4c) correspondant.

3. Support selon la revendication 2, **caractérisé en ce que** chaque élément de soutien (5a, 5b, 5c) a une forme de parallélépipède.

4. Support pour un moteur, en particulier pour un moteur électrique de roue de ventilateur d'une installation de chauffage ou de climatisation d'un véhicule automobile, équipé
- d'un adaptateur (20) qui peut être fixé sur un composant de moteur extérieur et entoure celui-ci au moins partiellement côté périphérie,
- d'une fixation de moteur (24) reliée à l'adaptateur (20) et
- d'au moins un élément de soutien (29a, 29b, 29c) dissociant le véhicule des vibrations,
- l'adaptateur (20) présentant une surface de fond (21) pouvant être fixée sur une extrémité avant du composant de moteur extérieur et des doigts de retenue (22a, 22b, 22c) dépassant axialement de cette surface, dont la zone d'extrémité libre (23a, 23b, 23c) est pliée radialement vers l'extérieur , et
- l'adaptateur (20) et la fixation de moteur (24) sont reliés par les éléments de soutien (29a, 29b, 29c) dissociant le véhicule des vibrations par le fait que, à chaque fois, un élément de soutien est disposé entre une zone d'extrémité de doigt de retenue, plié. radialement vers l'extérieur, de l'adaptateur et un bras de fixation (28a, 28b, 28c) espacé axialement de cette zone et agencé radialement, de la fixation de moteur.

5. Support selon la revendication 4, **caractérisé en ce que** chaque élément de soutien (29a, 29b, 29c) est disposé dans le sens axial entre le bras de fixation (28a, 28b, 28c) attribué et la zone d'extrémité (23a, 23b, 23c) du doigt de retenue (22a, 22b, 22c) correspondant.

6. Support selon la revendication 5, **caractérisé en ce que** chaque élément de soutien (29a, 29b, 29c) présente une section circulaire.

7. Support selon l'une quelconque des revendications précédentes, **caractérisé en ce que** la surface de fond (3 ; 21) de l'adaptateur (1 ; 20) est de forme triangulaire.

8. Support selon l'une quelconque des revendications précédentes, **caractérisé en ce que** trois doigts de retenue (4a, 4b, 4c; 22a, 22b, 22c) dépassent axialement de la surface de fond (3 ; 21).

9. Support selon la revendication 8, **caractérisé en ce que** les doigts de retenue (4a, 4b, 4c ; 22a, 22b, 22c) sont disposés sur le même rayon.

10. Support selon la revendication 8 ou 9, **caractérisé en ce que** les trois doigts de retenue (4a, 4b, 4c ; 22a, 22b, 22c) sont disposés à une distance angulaire de 120° équidistante dans les trois zones d'extrémités triangulaires de la surface du fond (3 ; 21).

11. Support selon l'une quelconque des revendications précédentes, **caractérisé en ce que** l'adaptateur et la fixation du moteur sont fabriqués dans un plastique dur, en particulier un thermoplastique, comme par exemple du polypropylène ou du polyamide.

12. Support selon l'une quelconque des revendications précédentes, **caractérisé en ce que** chaque élément de soutien entre le doigt de retenue et le bras de fixation est un élément élastique comme du caoutchouc.

13. Support selon l'une quelconque des revendications précédentes, **caractérisé en ce que** chaque élément de soutien est fabriqué à base d'un plastique souple et élastique comme le caoutchouc, comme en particulier un élastomère thermoplastique.
